Europäisches Patentamt

European Patent Office

Office européen des brevets

(19)

(11) Numéro de publication : **0 065 637**
**B1**

(12) # FASCICULE DE BREVET EUROPÉEN

(45) Date de publication du fascicule du brevet :
**25.07.84**

(21) Numéro de dépôt : **82102972.5**

(22) Date de dépôt : **07.04.82**

(51) Int. Cl.³ : **A 23 L   1/226**, A 24 B 15/30,
C 07 C 47/56

(54) Utilisation d'un aidéhyde aromatique en tant qu'ingrédient aromatisant.

(30) Priorité : 21.05.81 CH 3314/81

(43) Date de publication de la demande :
01.12.82 Bulletin 82/48

(45) Mention de la délivrance du brevet :
25.07.84 Bulletin 84/30

(84) Etats contractants désignés :
CH DE FR GB IT LI NL

(56) Documents cités :
DE-A- 2 836 208
FR-A- 1 428 902
Chemical Abstracts vol. 71, no. 5 5 août 1969 Columbus, Ohio, USA R.H. WRIGHT et al. "Basis of odor specificity: homologs of benzaldehyde and nitrobenzene" page 268, colonne 2, abstract no. 21568x

(73) Titulaire : **FIRMENICH SA**
**1, route des Jeunes**
**CH-1211 Genève 8 (CH)**

(72) Inventeur : **Escher, Sina Dorothea**
**8, avenue du Lignon**
**CH-1219 Le Lignon (CH)**
Inventeur : **Dietrich, Paul**
**35, ch. de Saussac**
**CH-1256 Troinex (CH)**

(74) Mandataire : **Salvadori, Giuseppe, Dr.**
**c/o Firmenich S.A. Case Postale 239**
**CH-1211 Genève 8 (CH)**

## Description

La présente invention se rapporte au domaine des arômes. En particulier, elle a trait à l'utilisation d'un aldéhyde aromatique, le 4-méthyl-2-hydroxy-benzaldéhyde en tant qu'ingrédient aromatisant pour la préparation de compositions aromatisantes de nature variée et l'aromatisation d'aliments, boissons, préparations pharmaceutiques et du tabac.

L'invention se rapporte également à une composition aromatisante caractérisée en ce qu'elle contient en tant qu'ingrédient actif le 4-méthyl-2-hydroxy-benzaldéhyde.

L'invention a enfin trait à un aliment ou une boisson contenant, en tant qu'ingrédient aromatisant, le 4-méthyl-2-hydroxy-benzaldéhyde.

Le 4-méthyl-2-hydroxy-benzaldéhyde est un composé connu [voir par exemple : Ber. 11, 773 (1878) et Bulletin Soc. Chim. France 35, 129-134 (1924)], cependant, ses propriétés organoleptiques ont passé à ce jour inaperçues.

Quoique homologue supérieure de l'aldéhyde salicylique, le composé de l'invention présente des caractères aromatisants propres, bien distincts par ailleurs de ceux développés par l'aldéhyde salicylique même. Ce dernier composé présente en effet une odeur piquante et irritante semblable à celle du benzaldéhyde, de l'acétophénone ou du nitrobenzène mais avec une note phénolique marquée, ce qui rend son utilisation difficile. Le 4-méthyl-2-hydroxy-benzaldéhyde par contre développe une note gustative douce de type caramel et brûlé qui rappelle certains aspects de la coumarine.

De par ses propriétés organoleptiques, le 4-méthyl-2-hydroxy-benzaldéhyde peut trouver un emploi étendu dans la manufacture d'arômes de type varié. En se mariant aisément avec d'autres ingrédients aromatisants courants, il peut servir à la préparation d'arômes de type caramel, vanille, cacao, chocolat, noix, foin, tabac, cannelle ou en tant que substitut partiel de la coumarine. De tels arômes peuvent servir à l'aromatisation d'aliments en général, particulièrement des produits de boulangerie ou de pâtisserie, ou de boissons, à base de lait ou cacao, de yoghourts ou du tabac et produits à base de tabac.

Les proportions dans lesquelles l'aldéhyde de l'invention développe des effets aromatisants intéressants sont comprises dans une gamme étendue de valeurs. De préférence, il est utilisé à des concentrations comprises entre environ 0,1 et 10 ppm (parties par million) en poids par rapport au poids total de l'aliment aromatisé, de telles concentrations allant bien au-delà des limites indiquées lors de la préparation d'arômes concentrés.

Lors de l'aromatisation du tabac ou des produits à base de tabac, la valeur moyenne des concentrations se situe à environ 50 ppm, elle peut cependant être comprise entre 5 et 200 ppm.

Le 4-méthyl-2-hydroxy-benzaldéhyde peut être utilisé par addition directe à l'aliment, boisson ou tabac que l'on désire aromatiser, plus fréquemment cependant il est utilisé en solution dans un solvant comestible usuel, tel le dipropylène-glycol ou la triacétine, ou sur un support approprié comme la gomme arabique ou une dextrine.

Le 4-méthyl-2-hydroxy-benzaldéhyde peut être préparé par l'une des méthodes connues, par exemple à partir de m-crésol suivant G. Casiraghi et al., J. Chem. Soc., Perkin I, (1980), 1862-5.

L'invention est illustrée d'une manière plus détaillée par les exemples suivants.

### Exemple 1

On a préparé une composition aromatisante de base de type vanille-caramel en mélangeant les ingrédients suivants (parties en poids) :

| | |
|---|---|
| Maltol | 15 |
| Vanilline | 200 |
| Ethylvanilline | 50 |
| Alcool anisique | 10 |
| Acétoïne | 5 |
| Ether de Rhum | 20 |
| Propylèneglycol | 700 |
| Total | 1 000 |

En utilisant 100 g de la composition indiquée ci-dessus, on a préparé deux nouvelles compositions dont l'une constitue la composition « témoin ».

| | A (« témoin ») | B (« test ») |
|---|---|---|
| Composition de base | 100 | 100 |
| 4-Méthyl-2-hydroxy-benzaldéhyde à 10 % dans l'éthanol | — | 20 |
| Ethanol à 95 % | 900 | 880 |
| | 1 000 | 1 000 |

2

**0 065 637**

Les compositions A et B ainsi préparées, diluées dans de l'eau de source à raison de 0,1 %, ont été évaluées par un groupe d'experts qui étaient appelés à se prononcer sur leurs propriétés gustatives.
Les commentaires formulés peuvent se résumer ainsi :

Composition A : note vanille
Composition B : note vanille-caramel avec un arrière goût légèrement coumariné.

Exemple 2

0,5 g d'une solution à 1 % de 4-méthyl-2-hydroxybenzaldéhyde dans l'éthanol à 95 % ont été dispersés sur 100 g d'un mélange de tabacs de type « american blend ». Le tabac aromatisé ainsi a ensuite été utilisé pour la manufacture de cigarettes « test » dont la fumée a été soumise à une évaluation organoleptique, après comparaison de celle-ci avec la fumée de cigarettes « témoin », non aromatisées, dont le tabac avait été préalablement traité par de l'éthanol à 95 %.
Le groupe d'experts requis a déclaré que la fumée des cigarettes « test » possédait une note plus douce et agréable et un caractère coumariné.

**Revendications**

1. Utilisation de 4-méthyl-2-hydroxy-benzaldéhyde en tant qu'ingrédient aromatisant.

2. Composition aromatisante caractérisée en ce qu'elle contient en tant qu'ingrédient actif le 4-méthyl-2-hydroxy-benzaldéhyde.

3. Aliment ou boisson caractérisés en ce qu'ils contiennent en tant qu'ingrédient aromatisant le 4-méthyl-2-hydroxy-benzaldéhyde.

**Claims**

1. Utilization of 4-methyl-2-hydroxy-benzaldehyde as flavour ingredient.

2. Flavour composition characterized in that it contains 4-methyl-2-hydroxy-benzaldehyde as active ingredient.

3. Foodstuff or beverage characterized in that they contain 4-methyl-2-hydroxy-benzaldehyde as flavour ingredient.

**Ansprüche**

1. Verwendung von 4-Methyl-2-hydroxy-benzaldehyd als Aromabestandteil.

2. Aromakomposition dadurch gekennzeichnet, dass sie als aktiven Bestandteil 4-Methyl-2-hydroxy-benzaldehyd enthält.

3. Nahrungsmittel bzw. Getränk dadurch gekennzeichnet, dass es als Aromabestandteil 4-Methyl-2-hydroxy-benzaldehyd enthält.